# EUROPEAN PATENT APPLICATION

(11) **EP 2 053 513 A1**
(43) Date of publication of application: **29.04.2009**
(21) Application number: 07301504.2
(22) Date of filing: 26.10.2007
(51) Int. Cl.: G06F 11/14, G06F 21/00

(54) **Method of managing data to be stored from a removable storage device into an online storage area and vice-versa**

(71) Applicant: GEMPLUS, 13420 Gémenos (FR)
(72) Inventor: Galland, Antoine, 13004, MARSEILLE (FR); George, Patrick, 13600, LA CIOTAT (FR); Charbonnier, Emilien, 83740, LA CADIERE D'AZUR (FR)

(57) **Abstract**

The invention is a method of managing data stored in a removable storage device, an online storage area being contained in a first server, a second server being intended to manage access conditions to data stored in said online storage area, said method comprises the steps of
- connecting said removable storage device to a first host machine,
- authenticating to the second server via said first host machine,
- copying automatically data stored in said removable storage device into the online storage area,
- authenticating to the second server via a second host machine),
- accessing data copied in the online storage area from the second host machine.

## Description

### (Field of the invention)

The present invention relates to methods of managing data intended to be stored in a removable storage device. It relates particularly to methods of managing data that may be shared between several users.

### (Prior art)

Removable storage devices are portable electronic objects offering data storing features. They comprise a memory intended to store data, a controller that manages the memory and communication means allowing communicating with a connected host machine. In particular removable storage devices may be USB (for Universal Serial Bus) device or smart card. These devices may be limited to simple storage features or may embed means allowing additional features, like security features. Such devices are widely used for storing data that are protected by specific access conditions.

When a user does not have his removable storage device with him, he cannot access data stored in the removable storage device. In other words, when the removable storage device is physically not present, the user cannot use the removable storage device content.

However when a user has lost or forgotten his removable storage device, he may want to access removable storage device data.

### (Summary of the Invention)

An object of the invention is to solve the above mentioned technical problem.

The object of the present invention is a method of managing data stored in a first removable storage device. An online storage area is contained in a first server. A second server is intended to manage access conditions to data stored in said online storage area. Said method comprises the following steps:
a) connecting said removable storage device (RSD1) to a first host machine,
b) authenticating to the second server via said first host machine,
c) copying automatically data stored in said removable storage device into the online storage area,
d) authenticating to the second server via a second host machine,
e) accessing data copied in the online storage area from the second host machine.

The data copied in the online storage area may be a backup copy of data stored in said first removable storage device.

Said method may comprise the further steps:
f) connecting a second removable storage device to a third host machine,
g) authenticating to the second server via said third host machine,
h) synchronizing data stored in the online storage area with data stored in said second removable storage device.

The synchronization of step h) may be carried out by using either data stored in said second removable storage device or data stored in the online storage area as a reference.

At least one software application may be stored in a third server, and said method may comprise the further step:
j) copying at least one software application into said second removable storage device.

Said first removable storage device may comprise first credentials. The authentication of step b) may be done using first credentials and the authentication of step d) may be done using second credentials.

Said second removable storage device may comprise third credentials and said method may comprise the further step:
k) revoking said first credentials before the synchronization of step h).

Said first credentials may allow to access data stored into the online storage area according to a first set of access conditions. Said third credentials may allow to access data stored into the online storage area according to said first set of access conditions.

The first server may comprise a user data area comprising data. The second server may be intended to manage access conditions to data stored in said user data area. Said first credentials may allow to access data stored into the user data area according to a second set of access conditions. Said third credentials may allow to access data stored into the user data area according to said second set of access conditions.

Said second credentials may allow to access data stored into the user data area according to a third set of access conditions.

The authentication of step b) may be carried out by means embedded in said first host machine or in said first removable storage device.

The automatic copy of step c) may be carried out by means embedded in said first host machine or in said first removable storage device.

Said first removable storage device may comprise a first object referenced by an identifier. The online storage area may comprise a second object referenced by said identifier, said second object being a copy of the first object. The first server may comprise a user data area and said method may comprise the further steps:
l) asking a copy of the first object to the user data area,
m) sending a request to the first server, wherein said request comprises said identifier,
n) in response to said request, copying said second object from the online storage area to the user data area.

Another object of the invention is a removable storage device intended to be connected to a host machine. Said host machine is intended to be connected to first and second servers. Said first server comprises an online storage area being intended to comprise data. Said second server is intended to manage access conditions to data stored in said first server. Said removable storage device comprises:
- a microprocessor,
- a communication interface,
- an operating system,
- a working memory,
- a non volatile memory, intended to comprise data,
- first means for authenticating to the second server via said first host machine,
- second means for automatically copying data stored in said removable storage device into the online storage area,
- third means for synchronizing data stored in the online storage area with data stored in said removable storage device.

Said removable storage device may comprise credentials allowing to access data stored into the online storage area.

The removable storage device may be a smart card.

Another object of the invention is a system comprising a host machine, first and second servers intended to be connected to the host machine. Said first server comprises an online storage area and a user data area. Said online storage area and user data area are intended to comprise data. The second server is intended to manage access conditions to data stored in said first server. The host machine is intended to be connected to a removable storage device comprising data. Said system comprises
- first means for authenticating to the second server,
- second means for automatically copying data stored in said removable storage device into the online storage area,
- third means for synchronizing data stored in the online storage area with data stored in said removable storage device,
- fourth means for accessing data stored in said online storage area and user data area.

Data stored in the online storage area may be a backup copy of data stored in said removable storage device.

Said first means and/or second means and/or third means and/or fourth means may be embedded in the host machine and/or in the removable storage device.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically a first example of architecture of a system for managing data intended to be stored in a removable storage device according to the invention;
- Figure 2 is an example of algorithm for accessing data intended to be stored in a removable storage device according to the invention;
- Figure 3 depicts schematically a second example of architecture of a system for managing data intended to be stored in a removable storage device according to the invention; and
- Figure 4 depicts schematically an example of architecture of a removable storage device intended to store data according to the invention.

### (Detailed description of the preferred embodiments)

The invention may apply to any types of removable storage devices. In this specification, the removable storage device is a USB device but it could be any other kind of electronic device intended to store data. In particular, it may be a USB key.

An advantage of the invention is to ease the sharing of data between multiple users.

Another advantage of the invention is to guarantee that shared data is managed according to predefined access conditions.

Another advantage of the invention is to allow a dynamical update of access conditions associated to data intended to be stored in a removable storage device.

Another advantage of the invention is to allow an update of data intended to be stored in a removable storage device even if the removable storage device is not physically accessible.

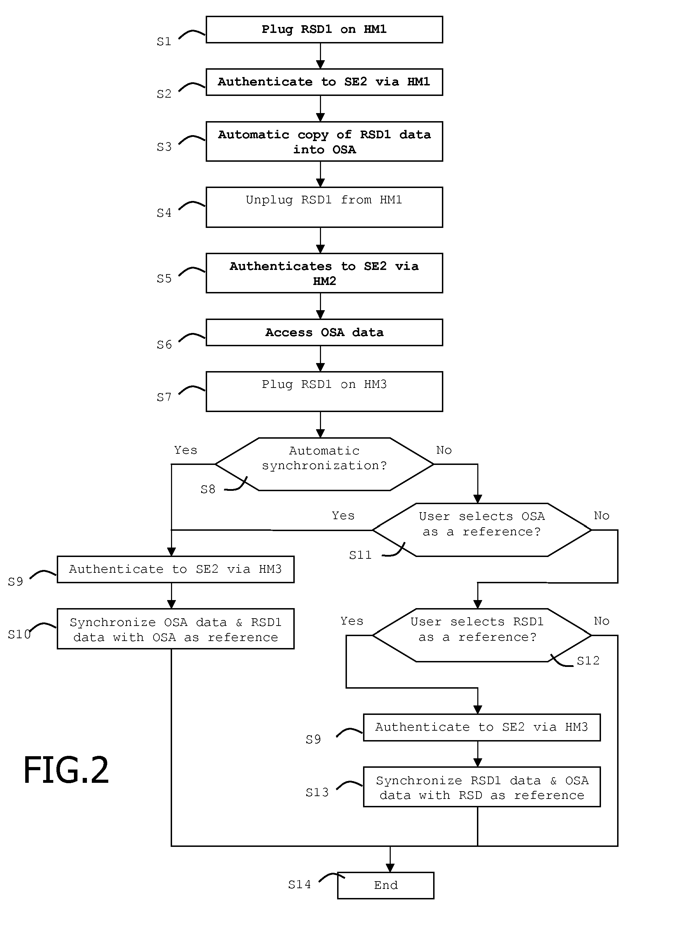

Figure 1 shows the architecture of a system for managing data intended to be stored in a removable storage device according to a preferred embodiment of the invention.

A removable storage device RSD1 comprises first and second data D1 and D2, an object O1 and credentials CR1. The removable storage device RSD1 is connected to a first host machine HM1. The connection may be made through a physical contact or by means of wireless communication. The host machine HM1 may access to three distant servers SE1, SE2 and SE3 through Internet.

The host machine HM1 comprises a browser BRO, a first means AP1 allowing authenticating to the second server SE2 and a second means AP2 allowing an automatic copy of data stored in the connected removable storage device RSD1 into the first server SE1.

The first server SE1 comprises an online storage area OSA and a user data area UAD. The online storage area OSA is intended to store a copy of data stored in the removable storage device RSD1. The user data area UAD is intended to store data managed by a user of the removable storage device RSD1.

Advantageously, the data stored in the online storage area OSA is a backup copy of data stored in the removable storage device RSD1.

Alternatively, first means AP1 and / or second means AP2 may be embedded in the removable storage device RSD1.

The second server SE2 is in charge of the digital access management and comprises access conditions AC1, AC2, AC3 related to data stored in server SE1.

The third server SE3 comprises several software applications AP1, AP2, AP3 and AP4 that may be retrieved from server SE3 via other servers or via host machines.

A second host machine HM2 may access to three distant servers SE1, SE2 and SE3 through Internet.

The second host machine HM2 may comprise a browser BRO, a first means AP1 allowing authenticating to the second server SE2 and a fourth means AP4 allowing to access data of server SE1.

Either first and fourth means AP1 and AP4 are already installed in the host machine HM2 or the second host machine HM2 may use its browser BRO for retrieving first means AP1 and fourth means AP4 from the server SE3.

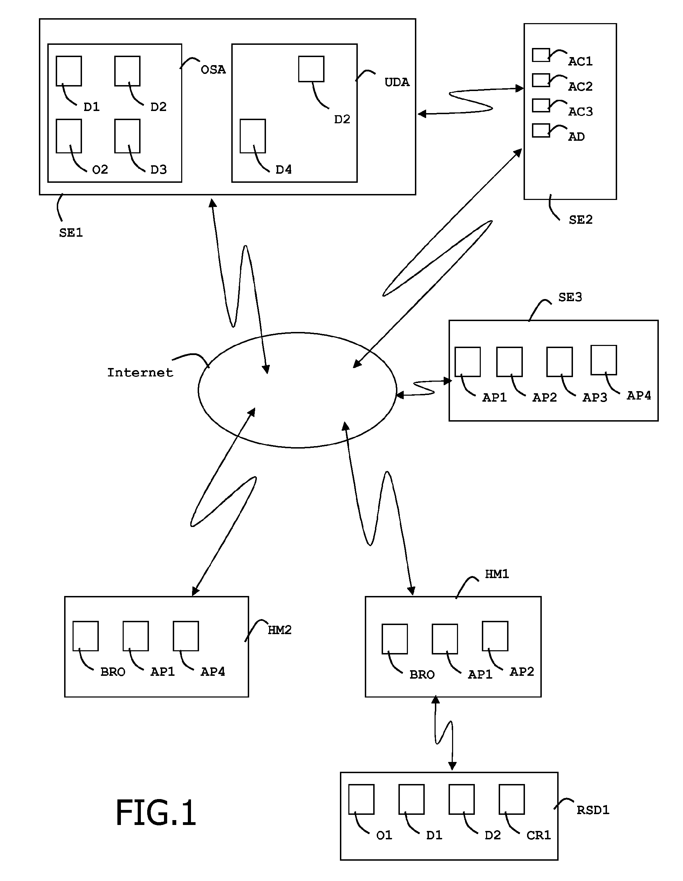

Figure 2 shows an example of algorithm for managing data intended to be stored in a removable storage device according to the invention.

First the removable storage device RSD1 is connected to the host machine HM1 at step S1. Then an authentication is performed to server SE2 via the host machine HM1 at step S2. This authentication may be performed thanks to credentials CR1 stored in device RSD1 or by using other predefined credentials like a login/password couple. The second server SE2 comprises authentication data AD that are used for deciding if the authentication succeeded or failed.

Credentials CR1 may correspond to predefined access conditions AC1 to the online storage area OSA second of server SE1.

In case of success of the authentication, an automatic copy of RSD1 data is launched into the online storage area OSA at step S3.

Alternatively, only a part of data stored in the removable storage device RSD1 may be copied into the online storage area OSA. In a preferred embodiment, credentials CR1 are not copied in the online storage area OSA.

Then at step S4 the removable storage device RSD1 is unplugged from the host machine HM1.

At step S5, a second authentication is performed to server SE2 via the host machine HM2. In this example, the removable storage device RSD1 is not connected to the second host machine HM2. The authentication is performed by using a second credentials CR2 like a login/password couple.

In case of success of the second authentication, access to data stored in the online storage area OSA is authorized to the second host machine HM2. According to access conditions AC3 stored in the second server SE2, the second host machine HM2 may read and/or write data stored in the online storage area OSA and may create new data in the online storage area OSA. Access conditions AC3 may allow an access in full or in part to the online storage area OSA at step S6.

For example, assuming that data D1 and D2 have been copied from the removable storage device RSD1 to the online storage area OSA, the second host machine HM2 may update data D2 and create an additional data D3 in the online storage area OSA.

Advantageously, several credentials may be provided to several users. Every user may access data of the removable storage device RSD1 through the online storage area OSA. Moreover the access may be provided in a secure way where each user may have own access conditions.

Advantageously, access conditions may correspond to three types of data: public, private and friend. Data of public type may be accessed by everybody. Data of private type may be accessed by the owner of the removable storage device only. Data of friend type may be accessed by all users having specific credentials provided with the agreement of the RSD1 owner.

Then the removable storage device RSD1 may be connected to a third host machine HM3 at step S7.

At step S8, a check is performed to detect if an automatic synchronization must be carried out.

If an automatic synchronization must be performed, an authentication is performed to server SE2 via the host machine HM3 at step S9. This authentication may be performed thanks to credentials CR1 stored in device RSD1 or by using a login/password couple or any other type of credentials.

In case of success of the authentication, an automatic synchronization of RSD1 data is launched, at step S10. In a preferred embodiment, the synchronization is performed using the data of the online storage area OSA as a reference.

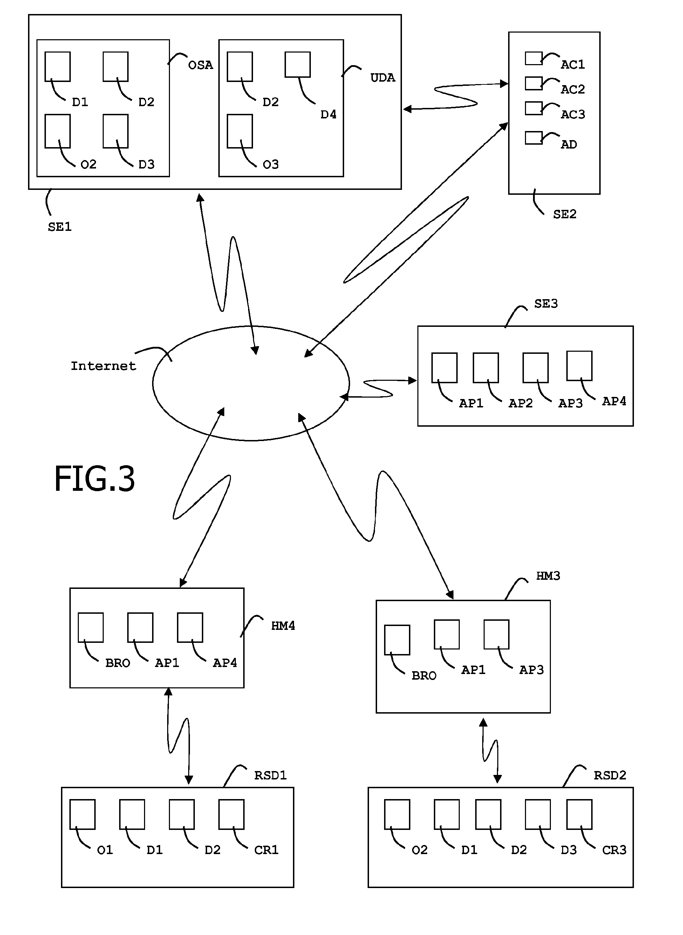

As shown at Figure 3, the host machine HM3 may comprise a browser BRO, a first means AP1 allowing authenticating to the second server SE2 and a third means AP3 allowing the synchronization of removable storage device RSD1 with data of the online storage area OSA.

Alternatively, third means AP3 may be embedded in the removable storage device RSD1.

Alternatively, the synchronization may be performed using the data of the removable storage device RSD1 as a reference.

If there is no automatic synchronization, user choice is taken into account. If the user selects the online storage area OSA as a reference at step S11, then an authentication is performed to server SE2 via the host machine HM3 at step S9. At step S10, in case of success of the authentication, a synchronization of RSD1 data is launched using the data of the online storage area OSA as a reference.

If the user does not select the online storage area OSA as a reference at step S11, then the user may select the removable storage device RSD1 as a reference at step S12. Then an authentication is performed to server SE2 via the host machine HM3 at step S9. At step S13, in case of success of the authentication, a synchronization of RSD1 data is launched using the data of the removable storage device RSD1 as a reference.

Advantageously, the server SE1 may comprise a user data area UDA and the access conditions AC1, AC2 and AC3 stored in server SE2 may be related to the user data area UDA of server SE1. For example predefined access conditions AC1, AC2 and AC3 may be associated to the user data area UDA. Access conditions AC1 may be authorized only if an authentication has been successfully performed with credentials CR1. Access conditions AC2 may be authorized only if an authentication has been successfully performed with credentials CR3 and access conditions AC3 may be authorized only if an authentication has been successfully performed with credentials CR2.

Thus if the user wants to copy the object O1 from the removable storage device RSD1 into the user data area UDA, a request may be sent from the host machine HM4 to the server SE1. Instead of sending the full object O1, an identifier ID1 of the object O1 may be sent in the request. Assuming that an object O2 is already stored in the online storage area OSA, said object 02 being a copy of the object O1, the identifier ID1 may be used for identifying the object O2. Thus the object 02 may be copied from the online storage area OSA into the user data area UDA in the form of an object 03. Objects O1, 02 and 03 have the same content and may be reached using the same identifier ID1. This copy operation of the object 02 into an object 03 allows reducing the size of the request sent by the host machine HM4 and allows speeding up the creation of the object 03 since the copy is performed in a unique server.

Advantageously, the identifier ID1 may be a Unique Resource Identifier known as URI.

As shown at Figure 3, a second removable storage device RSD2 may be updated with data stored in the online storage area OSA. This can be useful when the first removable storage device RSD1 has been lost or destroyed for example. The second removable storage device RSD2 has been previously initialized and contains credentials CR3. First the second removable storage device RSD2 is connected to the host machine HM3. For the current example, the content of the removable storage device RSD1 is assumed to have been copied into the online storage area OSA.

In a preferred embodiment, credentials CR1 are revoked and server SE2 records the revocation. Then the credentials CR3 stored in the second removable storage device RSD2 is linked to the online storage area OAS of the server SE1. For example, the server SE2 may store user accounts. Thus the credentials CR3 may be associated to the account of the user of the removable storage device RSD1. This link may be stored in data AD of server SE2.

As a consequence, credentials CR3 allow having the same access conditions than credentials CR1. After this operation, the content of the second removable storage device RSD2 is synchronized with the online storage area OSA using the data stored in the online storage area OSA as a reference.

Advantageously, the credentials CR3 may be linked to the user data area UDA too. In this case the credentials CR3 allow to access to data D4 which is present in the user data area UDA only.

Alternatively, the credentials CR1 may be kept valid and not revoked. In this case two removable storage devices will have same data and credentials providing the same access.

Advantageously, credentials CR1 and /or CR3 may be a proof a key or a virtual security token.

Advantageously, the software applications AP1 and/or AP2 and/or AP3 and/or AP4 may be retrieved from the server SE3 and installed on the removable storage device RSD2.

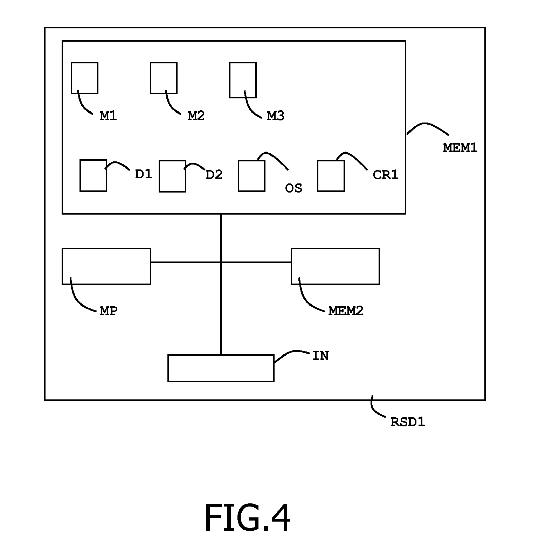

Figure 4 shows an example of architecture of a removable storage device RSD1 according to the invention. The removable storage device RSD1 comprises a microprocessor MP, a communication interface IN, a memory MEM1 and a working memory MEM2 like a RAM. The communication interface IN allows connecting a host machine and allows exchanging data with the connected host machine. The memory MEM1 is a non volatile memory like EEPROM or Flash memory. The memory MEM1 contains an operating system OS, credential CR1, first and second data D1 and D2. In this example, the memory MEM1 contains three means M1, M2 and M3. First means M1 is able to perform an authentication to the second server SE2 via the connected host machine. Second means M2 is able perform an automatic copy from data stored in the removable storage device RSD1 into the online storage area OSA of server SE1. Third means M3 is able to perform a synchronization of data stored in the removable storage device RSD1 with data stored in the online storage area OSA of server SE1.

Alternatively, removable storage devices intended to store data according to the invention may offer storage features only. In this case removable storage devices have no operating system OS.

Advantageously, the whole data stored in the removable storage device RSD1 but the credentials CR1 is copied into the online storage area OSA according to the invention.

Alternatively, a part of data stored in the removable storage device RSD1 is copied into the online storage area OSA according to the invention.

The above-described examples are not limitative. Thus the second removable storage device RSD2 may be the first removable storage device RSD1. The four host machines HM1, HM2, HM3 and HM4 may be merged in a unique or any number of host machines. The three servers SE1, SE2 and SE3 may be merged in a unique or any number of servers.

## Claims

1. A method of managing data (D1, D2) stored in a first removable storage device (RSD1), an online storage area (OSA) being contained in a first server (SE1), a second server (SE2) being intended to manage access conditions to data stored in said online storage area (OSA), said method comprises the following steps:
a) connecting (S1) said removable storage device (RSD1) to a first host machine (HM1),
b) authenticating (S2) to the second server (SE2) via said first host machine (HM1),
**characterized in that** said method comprises the further steps:
c) copying (S3) automatically data (D1, D2) stored in said removable storage device (RSD1) into the online storage area (OSA),
d) authenticating (S5) to the second server (SE2) via a second host machine (HM2),
e) accessing (S6) data (D1, D2) copied in the online storage area (OSA) from the second host machine (HM2).

2. A method according to claim 1, wherein the data copied in said online storage area (OSA) is a backup copy of data stored in said first removable storage device (RSD1).

3. A method according to one of claims 1 to 2, wherein said method comprises the further steps:
f) connecting (S7) a second removable storage device (RSD2) to a third host machine (HM3),
g) authenticating (S2) to the second server (SE2) via said third host machine (HM3),
h) synchronizing (S10) data (D1, D2, D3) stored in the online storage area (OSA) with data (D1, D2) stored in said second removable storage device (RSD2).

4. A method according to claim 3, wherein the synchronization of step h) is carried out by using either data (D1, D2) stored in said second removable storage device (RSD2) or data (D1, D2, D3) stored in the online storage area (OSA) as a reference.

5. A method according to one of claims 3 to 4, wherein at least one software application (AP1, AP2, AP3, AP4) is stored in a third server (SE3), and wherein said method comprises the further step:
j) copying at least one software application into said second removable storage device (RSD2).

6. A method according to one of claims 3 to 5, wherein said first removable storage device (RSD1) comprises first credentials (CR1), wherein the authentication of step b) is done using first credentials (CR1) and wherein the authentication of step d) is done using second credentials (CR2).

7. A method according to claim 6, wherein said second removable storage device (RSD2) comprises third credentials (CR3) and wherein said method comprises the further step:
k) revoking said first credentials (CR1) before the synchronization of step h).

8. A method according to claim 7, wherein said first credentials (CR1) allow to access data (D1, D2) stored into the online storage area (OSA) according to a first set of access conditions (AC1) and wherein said third credentials (CR3) allow to access data (D1, D2) stored into the online storage area (OSA) according to said first set of access conditions (AC1).

9. A method according to one of claims 7 or 8, wherein the first server (SE1) comprises a user data area (UDA) comprising data (D4), wherein second server (SE2) is intended to manage access conditions to data stored in said user data area (UDA), wherein said first credentials (CR1) allow to access data (D2, D4) stored into the user data area (UDA) according to a second set of access conditions (AC2) and wherein said third credentials (CR3) allow to access data (D2, D4) stored into the user data area (UDA) according to said second set of access conditions (AC2).

10. A method according to claim 9, wherein said second credentials (CR2) allow to access data (D2, D4) stored into the user data area (UDA) according to a third set of access conditions (AC3).

11. A method according to one of claims 1 to 10, wherein the authentication of step b) is carried out by means (AP1) embedded in said first host machine (HM1) or in said first removable storage device (RSD1).

12. A method according to one of claims 1 to 11, wherein the automatic copy of step c) is carried out by means (AP2) embedded in said first host machine (HM1) or in said first removable storage device (RSD1).

13. A method according to one of claims 1 to 12, wherein said first removable storage device (RSD1) comprises a first object (O1) referenced by an identifier (ID1), wherein the online storage area (OSA) comprises a second object (O2) referenced by said identifier (ID1), said second object (O2) being a copy of the first object (O1), wherein the first server (SE1) comprises a user data area (UDA), and wherein said method comprises the further steps:
l) asking a copy of the first object (O1) to the user data area (UDA),
m) sending a request to the first server (SE1), wherein said request comprises said identifier (ID1),
n) in response to said request, copying said second object (O2) from the online storage area (OSA) to the user data area (UDA).

14. A removable storage device (RSD1) intended to be connected to a host machine (HM1), said host machine (HM1) being intended to be connected to first and second servers (SE1, SE2), said first server (SE1) comprising an online storage area (OSA) being intended to comprise data (D1, D2, D3), said second server (SE2) being intended to manage access conditions to data stored in said first server (SE1), said removable storage device (RSD1) comprising:
- a microprocessor (MP),
- a communication interface (IN),
- an operating system (OS),
- a working memory (MEM2),
- a non volatile memory (MEM1), intended to comprise data (D1, D2),
- first means (M1) for authenticating to the second server (SE2) via said first host machine (HM1),
**characterized in that** said removable storage device (RSD1) comprises:
- second means (M2) for automatically copying data (D1, D2) stored in said removable storage device (RSD1) into the online storage area (OSA),
- third means (M3) for synchronizing data (D1, D2) stored in the online storage area (OSA) with data (D1, D2) stored in said removable storage device (RSD1).

15. A removable storage device (RSD1) according to claim 14, **characterized in that** said removable storage device (RSD1) comprises credentials (CR1) allowing to access data (D1, D2) stored into the online storage area (OSA).

16. A removable storage device (RSD1) according to one of claims 14 to 15, **characterized in that** said removable storage device (RSD1) is a smart card.

17. A system comprising a host machine (HM1), first and second servers (SE1, SE2) intended to be connected to said host machine (HM1), said first server (SE1) comprising an online storage area (OSA) and a user data area (UDA), said online storage area (OSA) and user data area (UDA) being intended to comprise data (D2, D4), said second server (SE2) being intended to manage access conditions to data stored in said first server (SE1), said host machine (HM1) being intended to be connected to a removable storage device (RSD1) comprising data (D1, D2), said system comprising first means (AP1) for authenticating to the second server (SE2),
**characterized in that** said system comprises
- second means (AP2) for automatically copying data (D1, D2) stored in said removable storage device (RSD1) into the online storage area (OSA),
- third means (AP3) for synchronizing data (D1, D2) stored in the online storage area (OSA) with data (D1, D2) stored in said removable storage device (RSD1),
- fourth means (AP4) for accessing data stored in said online storage area (OSA) and user data area (UDA).

18. A system according to claim 17, **characterized in that** data stored in said online storage area (OSA) is a backup copy of data stored in said removable storage device (RSD1).

19. A system according to claim 18, **characterized in that** said first means and/or second means and/or third means and/or fourth means are embedded in the host machine (HM1) and/or in said removable storage device (RSD1).
